# EUROPEAN PATENT SPECIFICATION

(11) **EP 3 504 122 B1**
(45) Date of publication and mention of the grant of the patent: **27.01.2021**
(21) Application number: 17844074.9
(22) Date of filing: 17.07.2017
(51) Int. Cl.: B64C 27/08, B64C 11/46

(54) **MULTICOPTER WITH WIDE SPAN ROTOR CONFIGURATION**
MULTIKOPTER MIT ROTORKONFIGURATION MIT GROSSER SPANNWEITE
MULTICOPTÈRE AYANT UNE CONFIGURATION DE ROTOR À LARGE PORTÉE

(30) Priority: 26.08.2016 US 201615249077; 13.07.2017 US 201715649293
(43) Date of publication of application: 03.07.2019
(73) Proprietor: Kitty Hawk Corporation, Mountain View, CA 94043 (US)
(72) Inventor: REICHERT, Todd, Mountain View, CA 94043 (US); ROBERTSON, Cameron, Mountain View, CA 94043 (US); CUTLER, Mark, Johnson, Mountain View, CA 94043 (US)
(74) Representative: McKinnon, Alistair James
(86) International application number: PCT/US2017/042394
(87) International publication number: WO 2018/038822

(56) References cited:
- WO-A1-2015/092389
- WO-A1-2015/145101
- WO-A1-2015/145101
- DE-A1-102013 014 145
- US-A- 3 889 902
- US-A- 3 889 902
- US-A1- 2009 008 499
- US-A1- 2011 042 509
- US-A1- 2015 012 154
- US-A1- 2015 012 154
- US-A1- 2016 059 958
- US-A1- 2016 311 526
- US-B1- 6 254 032
- US-B1- 6 293 491
- US-B1- 6 446 910
- US-B2- 7 159 817
- US-B2- 7 263 945
- US-B2- 7 699 260

## Description

### BACKGROUND OF THE INVENTION

Small scale, lightweight, and personal aircraft have been described. For example, some have imagined small aircraft used routinely for personal transportation, such as to get to and from work or school, and/or for entertainment. The ability to store and/or transport a personal aircraft may become a design consideration. For example, a personal aircraft may need to be transported by ground, e.g., in a trailer or on a truck bed, to be taken to a location from which the aircraft can safely take off and land.

US 2011/042509 discloses an aerial vehicle adapted for vertical takeoff and landing using the same set of engines for takeoff and landing as well as for forward flight. An aerial vehicle which is adapted to takeoff with the wings in a vertical as opposed to horizontal flight attitude which takes off in this vertical attitude and then transitions to a horizontal flight path. An aerial vehicle which controls the attitude of the vehicle during takeoff and landing by alternating the thrust of engines, which are separated in at least two dimensions relative to the horizontal during takeoff, and which may also control regular flight in some aspects by the use of differential thrust of the engines.

WO 2015/092389 discloses a VTOL aircraft comprising a plurality of autonomous lifting modules wherein each autonomous lifting module is composed of a physical structure in which are mounted one or more electric ducted fans, an electrical energy storage system to drive the electric ducted fans, a charging and energy storage monitoring system to charge and monitor the electrical energy storage system, an inertial navigation system, electronic speed controllers to control the electric ducted fans and one or more microcomputers assuring (a) module flight stability by control of the electric ducted fans given the input of the inertial navigation system, (b) flight planning and (c) inter-module communication.

DE 10 2013 014145 discloses a mechanical locking system for establishing a secure connection with a bearing pin having a circumferential groove has a bearing bush with an inner region for receiving the bearing pin, having an annular recess arrangement, the recess arrangement being arranged opposite the circumferential groove in a state connected to the bearing journal.

US 2015/012154 discloses a vertical takeoff and landing aircraft for transporting persons or loads, including a plurality of equivalent and redundant electric motors and propellers, substantially arranged in one surface, wherein each propeller is assigned an individual electric motor to drive the propeller, the aircraft being characterized in that at least one attitude sensor is provided for attitude control of the aircraft in an active signal connection to at least one signal processing unit which is designed or set up to automatically perform the attitude control based on measurement data from the attitude sensor by regulating the speed of at least some of the electric motors, preferably with signal actions of the speed controller assigned to each electric motor such that the aircraft is positioned in space with the surface defined by the propeller substantially horizontal at all times, without control input by a pilot or a remote control.

### BRIEF DESCRIPTION OF THE DRAWINGS

Various embodiments of the invention are disclosed in the following detailed description and the accompanying drawings.
Figure 1 is a diagram illustrating an embodiment of a multicopter with wide span rotor configuration.
Figure 2A is a diagram illustrating a rotor orientation of an embodiment of a multicopter with wide span rotor configuration.
Figure 2B is a diagram illustrating a rotor orientation of an embodiment of a multicopter with wide span rotor configuration.
Figure 3 is a diagram illustrating an embodiment of a multicopter with wide span rotor configuration.
Figure 4 is a diagram illustrating a side view of an embodiment of a multicopter with wide span rotor configuration.
Figure 5 is a diagram illustrating an embodiment of a multicopter with wide span rotor configuration.
Figure 6A is a diagram illustrating an embodiment of a fuselage of a multicopter with wide span rotor configuration.
Figure 6B is a diagram illustrating an embodiment of a fuselage of a multicopter with wide span rotor configuration.
Figure 6C is a diagram illustrating an embodiment of a fuselage of a multicopter with wide span rotor configuration.
Figure 7 is a diagram illustrating an embodiment of rotor directions of rotation in a multicopter.
Figure 8 is a diagram illustrating an embodiment of the fixed tilt positions of the rotors in a multicopter.
Figure 9 is a diagram illustrating a front view and a side view of a multicopter embodiment.
Figure 10 is a diagram illustrating an embodiment of a float which includes batteries and a headrest with a cutout.

### DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task As used herein, the term 'processor' refers to one or more devices, circuits, and/or processing cores configured to process data, such as computer program instructions.

A multicopter aircraft is disclosed. The multicopter comprises a fuselage and a plurality of rotors. The plurality of rotors comprise inner rotors and outer rotors. The inner rotors are substantially surrounded by one or more other rotors, the fuselage, or a combination of one or more other rotors and the fuselage. In some embodiments, the inner rotors are tilted.

In some embodiments the rotors are tilted in various positions to enable efficient flight of the multicopter, for example to decrease drag or increase torque. In some embodiments, the multicopter comprises a wide span rotor configuration. The multicopter may comprise ten rotors. The multicopter may be driven using the one or more inner rotors before taking flight. Inner rotors alone may be utilized while the multicopter is flown close to a ground surface as a safety feature.

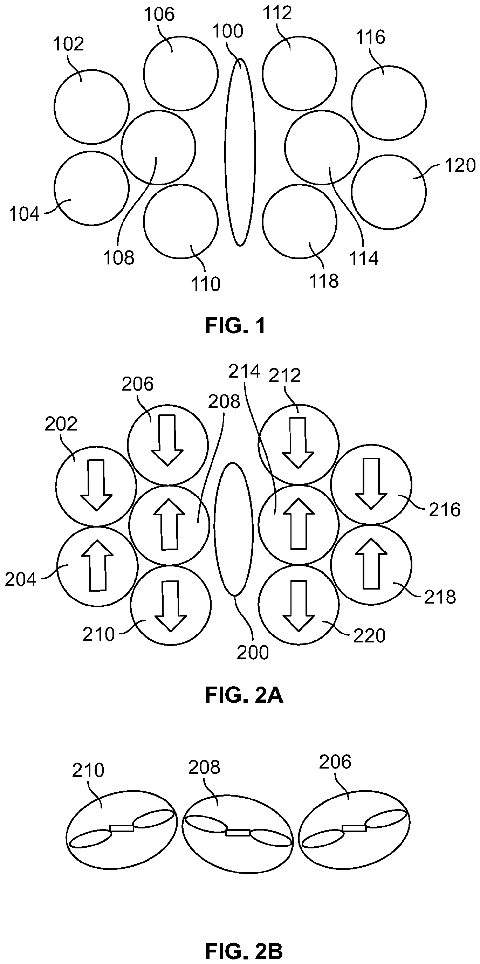

Figure 1 is a diagram illustrating an embodiment of a multicopter with wide span rotor configuration. In the example shown, the multicopter comprises three rotors adjacent to a side of the fuselage and two rotors adjacent to the three rotors and three rotors adjacent to an opposite side of the fuselage and two rotors adjacent to the three rotors adjacent to the opposite side of the fuselage. Rotors 106, 108, and 110 are adjacent to fuselage 100; rotors 102 and 104 are adjacent to rotors 106, 108, and 110. Rotors 112, 114, and 118 are adjacent to the opposite side of fuselage 100; rotors 116 and 120 are adjacent to rotors 112, 114, and 118.

In some embodiments, the one or more inner rotors of the multicopter comprise a middle rotor of the three rotors adjacent to the side of the fuselage and a middle rotor of the three rotors adjacent to the opposite side of the fuselage. For example, rotors 108 and 114 are inner rotors whereas the remaining rotors are outer rotors. In some embodiments, the one or more inner rotors of the multicopter comprise rotors that are substantially surrounded by other components of the aircraft. For example, inner rotor 108 is surrounded by fuselage 100 and rotors 110, 104, 102, and 106. Inner rotor 114 is surrounded by fuselage 100 and rotors 112, 116, 120, and 118. In some embodiments, an inner rotor includes a rotor that does not contribute to the perimeter of the aircraft. Outer rotors 106, 102, 104, 110, 112, 116, 120, and 118 are situated around the perimeter of the aircraft. An inner rotor may include a rotor that has a blade that cannot come in contact with an external body to the aircraft that is not directly above or below the aircraft. In various embodiments, the multicopter may comprise 2, 4, 6, or any appropriate number of inner rotors. The number of outer rotors the multicopter comprises may increase proportionally with the number of inner rotors.

In some embodiments, the one or more inner rotors and the outer rotors are arranged for maximum disc area and maximum wing span. In some embodiments, the multicopter has a width to length ratio ranging from 1.7 to 3. In some embodiments, the multicopter has a length of 2.24 metres (88 inches) or less. The multicopter may be designed to fit in a standard trailer. Dimensions of the multicopter may be constrained by the dimensions of a standard trailer. The length of the multicopter may be constrained by the width of a standard trailer and the width of the multicopter may be constrained by the length of a standard trailer. For example, the multicopter may be designed to fit in a trailer wherein the multicopter is inserted sideways. In some embodiments, the dimensions of the multicopter allow it to be transported easily in the event it is not flown and the multicopter cannot mobilize itself while landed. The multicopter is optimized for over-water flight and have flotation devices in lieu of wheels, leaving it difficult to transport over land.

In some embodiments, using ten rotors maximizes the aircraft's disc area within the desired dimensions. The number of rotors may be determined in order to maximize disc area while maintaining redundancy of the aircraft. Using a large number of rotors such a ten may allow the multicopter to maintain flight in the event of rotor failure or allow for precision in control of the aircraft. A rotor failure may require power to be cut to a rotor opposite the failed rotor in order to level the aircraft. In some embodiments, the ten rotors in the example shown have enough power to maintain level flight of the aircraft in the event a rotor malfunctions or two rotors are not utilized. In some embodiments, the rotors have a diameter of 1.27 metres (50 inches). The rotors may have the largest diameters possible within the constraints of the multicopter dimensions and having ten rotors. In some embodiments, the multicopter weighs 113.40 kg (250 pounds) or less. The multicopter may qualify as an ultralight aircraft under federal aviation regulation guidelines.

Rotors adjacent to the fuselage may be positioned at varying distances from the fuselage. Rotors adjacent to a same side of the fuselage may not be aligned. In the example shown, inner rotors 108 and 114 are further from fuselage 100 than outer rotors 106, 110, 112, and 118. Rotors adjacent to the fuselage may be arranged in a roughly elliptical position around the fuselage. In some embodiments, the multicopter is bilaterally symmetric.

The distance between rotors may vary. Rotors may be spaced apart in order to increase wing span of the aircraft. Rotors may be positioned close together or tips of the one or more inner rotors and the other rotors are overlapped. The rotors may be overlapped to improve efficiency of flight. In some embodiments, the rotors are positioned close to each other in order to minimize aircraft length or are spaced apart in order to increase aircraft width. The rotors may act like wings in forward flight of the aircraft. Positioning the rotors such that the aircraft has a large span may introduce fresh air to the rotors, increasing the efficiency of the aircraft.

Figure 2A is a diagram illustrating a rotor orientation of an embodiment of a multicopter with wide span rotor configuration. In some embodiments, the one or more inner rotors and the other rotors rotate in differing planes. For example, the rotors may not be level. Rotors may be mounted at different heights on the aircraft. The rotors may be mounted at various heights in order to prevent rotor collisions. Rotors may be mounted such that they are tilted at varying angles. In some embodiments, one or more inner rotors are tilted forwards. In some embodiments, four rotors closest to the front of the multicopter are tilted backwards, four rotors adjacent to the four rotors closest to the front of the multicopter are tilted forwards, and two rotors closest to the back of the multicopter are tilted backwards. In the example shown, the multicopter comprises fuselage 200. In some embodiments, rotors 206 and 212 are the aircraft's two front facing rotors. Rotors 206 and 212 are tilted backwards. Rotors 202, 208, 214, and 218 are tilted forwards. Rotors 210 and 220 are tilted backwards.

In some embodiments, rotors that are tilted backwards rotate towards the fuselage of the aircraft and rotors that are tilted forwards rotate away from the fuselage. Rotors 206, 202, 210, 214, and 218 may rotate to the right in the example shown. Rotors 204, 208, 212, 220, and 216 may rotate to the left. The direction that rotors rotate in or are tilted may be determined in a way such that the aircraft's direction can be changed without large changes in throttle. Rotors opposite each other on the aircraft may rotate in opposing directions to balance torque. A rotor may rotate in an opposite direction from rotors adjacent to the rotor in cardinal directions from the rotor.

Figure 2B is a diagram illustrating a rotor orientation of an embodiment of a multicopter with wide span rotor configuration. In some embodiments, rotors 206, 208, and 210 are a side view of rotors 206, 208, and 210 of Figure 2A. In the example shown, rotors 206 and 210 are tilted backwards and rotor 208 is tilted forwards. Rotors 206 and 210 are tilted such that they pivot up at the front facing end of the rotors (i.e. are tilted backwards). Rotor 208 pitches down in the direction of forward flight of the aircraft.

In some embodiments, the rotors are positioned such that from a lengthwise view of the multicopter, the rotors alternate in the direction they are angled. For example, rotors that are adjacent to a same side of the multicopter are alternatively pitched up or down. In some embodiments, alternating the direction the rotors are angled in enhances stability of the aircraft.

In some embodiments, the rotors are angled at a range from 5 to 10 degrees. In some embodiments, the angle of a rotor is determined based on energy conservation, maximizing forward force, and/or maintaining downwards force of the aircraft. A rotor that is angled too far may result in air being pushed to the sides of the multicopter rather than down, causing the aircraft to waste energy in hovering. In some embodiments, the angles at which rotors are positioned are determined based on simulations. In various embodiments, all rotors are tilted by the same degree or the rotors are tilted at varying angles.

In some embodiments, the multiple rotors are angled to enhance torque in directional flight. The rotors may be angled to attain greater yaw authority or increased torque. In some embodiments, rotors that are tilted forwards allow the aircraft to fly forward efficiently. Tilting the rotors forward may decrease the amount the aircraft must pitch forward in order to fly forward. Tilting the rotors forward may decrease the amount of drag the aircraft experiences or allow the aircraft to use less power. Tilting the rotors backwards may allow the aircraft to fly efficiently backwards. In some embodiments, the number of rotors tilted backwards is equal to the number of rotors tilted forwards. The angle of the rotors may be determined in order to maintain that the multicopter is level during flight. Power delivered to the rotors may be adjusted to maintain level or efficient flight of the aircraft. In some embodiments, rotors that are tilted backwards are throttled down when the aircraft engages in forward flight. A subset of rotors that are tilted backwards may be throttled down. For example, rotors 202, 206, 212, and 216 may be throttled down when the multicopter engages in forward flight.

In some embodiments, the rotors are positioned such that from a lengthwise view of the multicopter, the rotors alternate in the direction they spin. For example, rotors that are adjacent to a same side of the multicopter alternatively spin left or right. For example, rotors 206 and 210 may spin left while rotor 208 spins right. Alternating the direction rotors spin in may allow the aircraft to fly more efficiently. A rotor creates lift when the blade is traveling against the direction of wind and does not create lift when it spins in the direction of wind. By stacking up alternating rotors one behind the next in the direction of flight, the aircraft may experience a consistent amount of lift or decrease intervals of decreased lift.

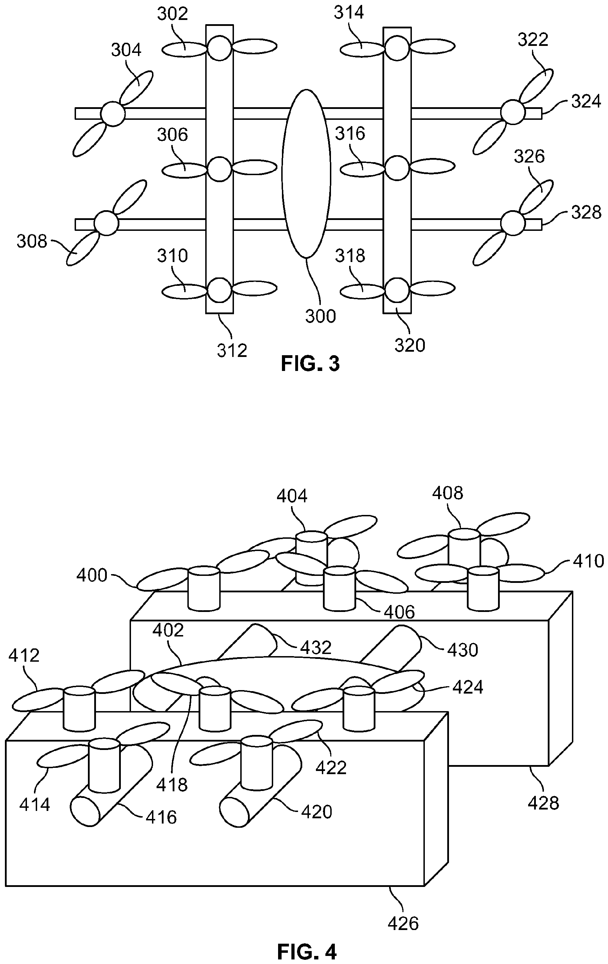

Figure 3 is a diagram illustrating an embodiment of a multicopter with wide span rotor configuration. According to the invention, the multicopter is optimized to fly over water and includes flotation devices. The flotation devices may be attached on either side of the fuselage. In some embodiments, the multicopter comprises two flotation devices that are positioned far apart. Positioning the flotation devices in a wide stance may increase stability of the aircraft or prevent the aircraft from flipping in the event the aircraft lands at an angle. In some embodiments, rotors are attached to the flotation devices.

Rotors 302, 206, and 310 are attached to flotation device 312 in the example shown. Rotors 314, 316, and 318 are attached to flotation device 320. Flotation devices 312 and 320 are on either side of fuselage 300. In the example shown, supports 324 and 328 are positioned perpendicular to the flotation devices. Rotors 322 and 304 are attached at either end of support 324. Rotors 308 and 328 are attached at either end of support 328. In some embodiments, supports 324 and 328 pass through flotation device 320, fuselage 300, and flotation device 312. For example, flotation device 320 may have a hole where support 328 passes through. The hole may be sealed in order to be watertight and airtight. In some embodiments, supports 324 and 328 do not pass through fuselage 300. The fuselage may have separate supports that attach on either side. In some embodiments, in lieu of support 328 four separate supports may be used. In various embodiments, supports 324 and 328 are rectangular prisms, rods, or any other appropriately shaped support. Supports 324 and 328 may be designed to securely support the weight of rotors 304, 322, 308, and 328. The supports may be lightweight. The supports may be rigid, resistant to torsion, or able to withstand high winds and inclement weather conditions.

In some embodiments, multiple batteries are stored in or attached to the flotation devices. The batteries may be used to power the aircraft. In some embodiments, the majority of the weight of aircraft is due to batteries. For example, the aircraft may comprise 54.43 kg (120 pounds) of batteries out of an overall weight of 113.40 kg (250 pounds). Storing the batteries in the flotation devices may allow the aircraft to have a low center of gravity, providing stability to the aircraft when it is on water. In some embodiments, the batteries are close to the rotors due to their placement in the flotation devices. Having batteries close to the rotors may allow for close cable runs, which allows motors of the aircraft to be easily controlled. Placing batteries close to the rotors may limit resistance caused by wires. Storing the batteries in the flotation devices keeps them away from the fuselage of the aircraft. In some embodiments, the batteries are a fire hazard that poses a danger to a pilot situated in the fuselage.

In some embodiments, the aircraft is designed to rest atop water via the flotation devices when it is not flown. In some embodiments, the multicopter can be driven on a body of water by powering a subset of the motors of the multicopter. In some embodiments, the multicopter is able to be driven by the one or more inner rotors. One or more inner rotors that are pitched forward may allow the aircraft to move forward. The aircraft may have a portion of the flotation devices immersed when the aircraft is at rest in water. The aircraft may be able to be driven across water without hovering over the water.

In some embodiments, the inner rotors are not accessible to a person or obstacle approaching the multicopter in a typical way (e.g. from a direction that is not directly above or below the aircraft). The multicopter may be driven using inner rotors alone until the multicopter is a position deemed safe for lift off. In some embodiments, the multicopter engages all of the motors and takes flight when it is determined to be safe. For example, the multicopter may include sensors that determine whether obstacles are nearby. In the event that obstacles are nearby, the multicopter may be driven using the inner rotors until the sensors indicate the location is clear. The ability to be driven using inner rotors may ensure safety or integrity of a pilot, the multicopter, or surrounding entities.

In some embodiments, the inner rotors alone are used to hover the multicopter. In some embodiments, the inner rotors alone are powered in order to conduct electricity for the aircraft. The inner rotors may not be tilted. In some embodiments, outer rotors or other rotors of the aircraft are not tilted. Instead, rotors are throttled up or down to navigate the aircraft. In some embodiments, the multicopter uses the inner rotors to accomplish tasks without introducing safety hazards.

In some embodiments, the aircraft is designed for flight over land. In some embodiments, 312 and 320 are support structures rather than flotation devices. Support structures 312 and 320 may have wheels attached underneath them to move the aircraft on land. Components that aid is landing may be included in supports 312 and 320 or attached to them, for example springs or load absorbing materials. In some embodiments, the aircraft comprises floatation devices and wheels.

Figure 4 is a diagram illustrating a side view of an embodiment of a multicopter with wide span rotor configuration. In the example shown, the aircraft is optimized for landing on water. The multicopter comprises fuselage 402. Supports 416, 420, 432, and 430 are attached to fuselage 402. Supports 416 and 420 are attached to flotation device 426. Supports 432 and 430 are attached to flotation device 428. Rotors 412, 416, and 424 are attached on top of flotation device 426. Rotors 400, 406, and 410 are attached on top of flotation device 428. Rotor 414 is attached on top of support 416, rotor 422 is attached on top of support 420, rotor 404 is attached on top of support 432, and rotor 408 is attached on top of support 430.

In some embodiments, a height of the flotation devices is greater than a width of the flotation devices. In the example shown, flotation devices 426 and 428 are thin and tall in shape. A large percentage of the flotation devices may be submerged underwater when the aircraft is at rest on water. The height of the flotation devices may ensure the rotors or a pilot of the aircraft stay dry. In some embodiments, components of the multicopter are treated to be waterproof or water resistant. In some embodiments, fuselage 402 is partially submerged in water when the aircraft is at rest on water. Flotation devices 426 and 428 may be inflated with air. Flotation devices 426 and 428 may have bottoms made of a thick or robust material such that the multicopter can be landed on rough terrain or surfaces other than water. In some embodiments, the flotation devices are curved. The flotation devices may be curved to increase stability during water landings.

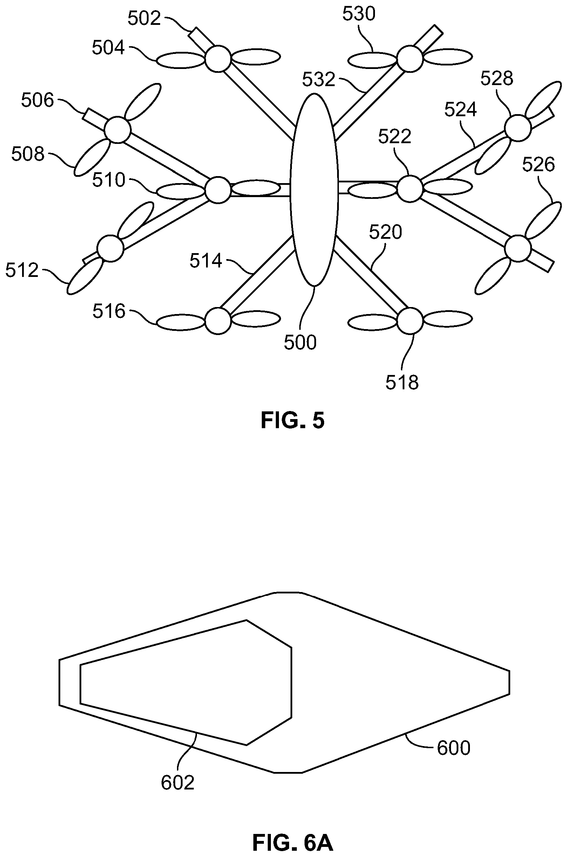

Figure 5 is a diagram illustrating an embodiment of a multicopter with wide span rotor configuration. In the example shown, struts 502, 532, 514, and 520 extend from fuselage 500 in an 'X' configuration. Struts 506 and 524 extend from either side of fuselage 500 both respectively in sideways "Y" configurations wherein the stem of the "Y" is attached to the fuselage. Rotors 508, 510, and 512 are positioned on top of strut 506. Rotors 528, 526, and 522 are positioned on top of strut 524. Rotor 504 is positioned on top of strut 502, rotor 530 is positioned on top of strut 532, rotor 516 is positioned on top of strut 514, and rotor 518 is positioned on top of strut 520. In the example shown, the rotors are positioned similarly to the rotors of Figure 4. However, the rotors are attached to a different formation of supports. In various embodiments, the strut or support formation varies widely. The support configuration may be determined based on weight restraints, aircraft stability, battery storage, aerodynamics, or any other appropriate constraint. In the example shown, the struts may all be flotation devices designed to keep the multicopter afloat when it lands on water. Flotation devices may be attached underneath the struts. Wheels may be attached underneath the struts.

Figure 6A is a diagram illustrating an embodiment of a fuselage of a multicopter with wide span rotor configuration. In some embodiments, the fuselage comprises an enclosed cabin. The cabin be designed for a pilot to be seated inside. In the example shown, fuselage 600 has window 602. Window 602 may allow a pilot visibility. The fuselage may protect a pilot from coming in contact with the rotors in event of an emergency. A pilot may be strapped into the fuselage in a recumbent position such that the pilot cannot personally touch the rotors of the multicopter. A pilot strapped into an enclosed fuselage may be capable of taking more load in an accident than a pilot riding on top of an open fuselage. In some embodiments, the fuselage has a steering mechanism. In some embodiments, the multicopter has a flight computer. For example, the flight computer may use ultrasound signals to determine whether obstacles are nearby and prevent flight in the event obstacles are present. Fuselage 600 has tapered ends and may be designed to be aerodynamic.

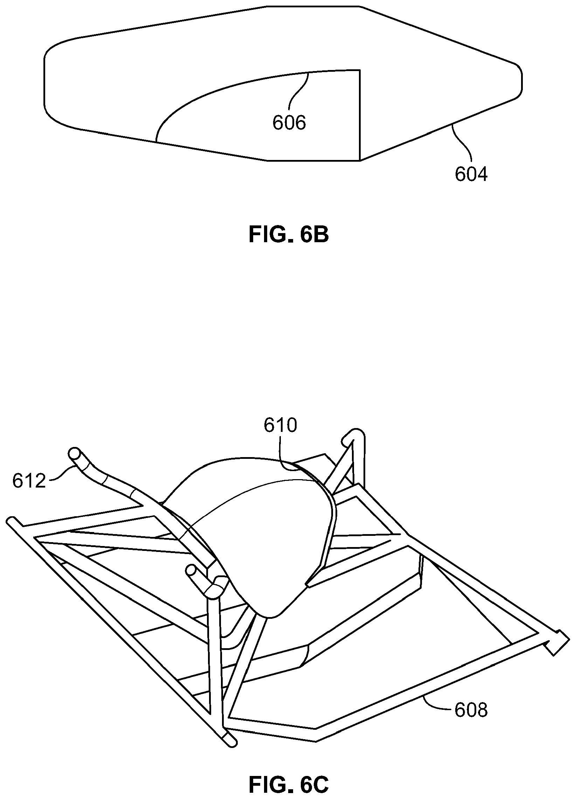

Figure 6B is a diagram illustrating an embodiment of a fuselage of a multicopter with wide span rotor configuration. In the example shown, fuselage 604 has door 606. Door 606 may be used by a pilot to enter the fuselage. The door may be anywhere on the fuselage. Fuselage 604 has a boxy front. In various embodiments, the fuselage is a variety of shapes and sizes. The fuselage may be designed to protect a pilot from water. The fuselage may be rigid and resistant to torsion. The fuselage may comprise safety elements such as a seatbelt that turns off power to the aircraft in the event the seatbelt is pulled out from the seat.

Figure 6C is a diagram illustrating an embodiment of a fuselage of a multicopter with wide span rotor configuration. In the example shown, the fuselage is not enclosed. Seat 610 is designed for a pilot to sit atop it and grasp handlebars 612. Structure 608 may enable the fuselage to be easily mounted to other supports that have attached rotors.

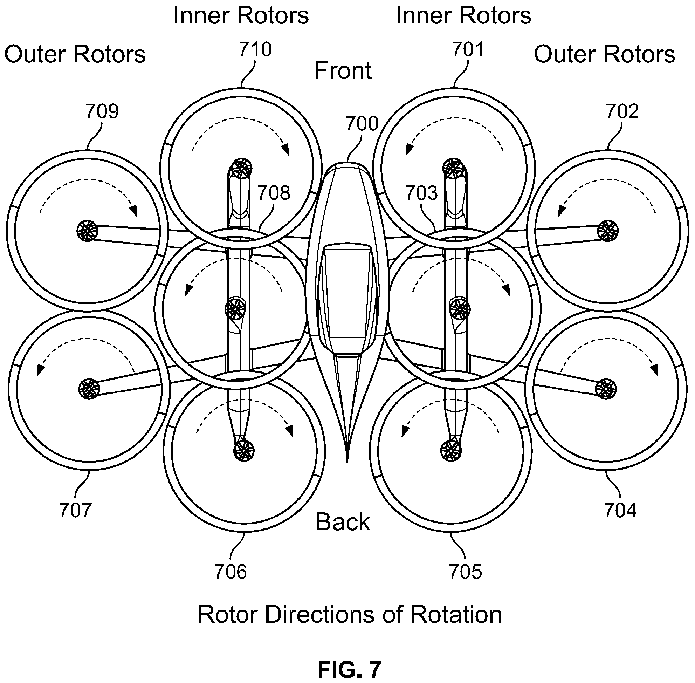

Figure 7 is a diagram illustrating an embodiment of rotor directions of rotation in a multicopter. In this example, a multicopter with 70 rotors is shown with 5 rotors each on the left (port) side and right (starboard) side of the multicopter. Inner rotors 701, 703, 705, 706, 708, and 170 are located adjacent to the fuselage (700). Outer rotors 702, 704, 707, and 709 are separated from the fuselage (700) by the inner rotors. The arrangement of rotors shown here is sometimes referred to as a wide span rotor configuration. In some embodiments, the multicopter weighs 113.40 kg (250 pounds) or less. Such a multicopter may qualify as an ultralight aircraft under federal aviation regulation guidelines.

In this example, the inner rotors (701, 703, 705, 706, 708, and 170) overlap with their neighboring or adjacent inner rotor(s). For example, inner rotor 710 overlaps with (and rotates above) inner rotor 708, which in turn overlaps with (and rotates above) inner rotor 706. Similarly, on the other side, inner rotor 701 overlaps with (and rotates above) inner rotor 703, which in turn overlaps with (and rotates above) inner rotor 705. As will be described in more detail below, to achieve the overlaps shown, the rotors are tilted at various angles and/or are placed at different heights in this example.

In some embodiments, having the inner rotors overlap with each other (one example of which is shown here) is attractive because it permits a smaller, more compact footprint of the multicopter than if the inner rotors did not overlap. A smaller footprint may be desirable because the multicopter takes up less space for transport or when parked, and/or a smaller safety zone is required when taking off or landing. Also, the weight can be reduced with a smaller airframe, which is desirable since less power is required to fly the aircraft and/or the range can be extended. The tradeoff with overlapping rotors is that they may interfere with each other aerodynamically (e.g., the airflow from one rotor interferes with another rotor) but this impact may be relatively small and/or acceptable given the benefits of a smaller footprint. For example, the overlap between inner rotors shown here is relatively small and so the interference may be negligible.

In some embodiments, a multicopter is sized so that it can fit into a trailer or on a flatbed and be towed. For example, because the wingspan is wider than the nose-to-tail length of the multicopter, the exemplary multicopter may be fit into an enclosed trailer or on an open flatbed trailer sideways. By having the inner rotors overlap, this makes it easier to fit the multicopter into standard sized trailers.

Using 10 rotors as shown here may be attractive for a variety of reasons. For example, 10 rotors maximizes the multicopter's disc area within a desired overall size (e.g., the desire to fit the multicopter into or on a standard-width trailer). Using 10 rotors also helps with redundancy because it permits the multicopter to maintain flight and possibly allow for some degree of flight precision even if there is rotor failure. It is noted that a rotor failure may require power to be cut to a rotor opposite to the failed rotor for symmetry and ease of flight.

In this example, the outer rotors do not overlap with their adjacent or neighboring inner rotors. For example, outer rotor 709 (702) does not overlap with inner rotor 710 (701) nor with inner rotor 708 (703). Similarly, outer rotor 707 (704) does not overlap with inner rotor 708 (703) nor with inner rotor 706 (705). However, the outer rotors do overlap with each other (e.g., outer rotor 709 (702) overlaps with outer rotor 707 (704)). Having some separation between an outer rotor and adjacent inner rotors (i.e., no overlap) may be desirable because the outer rotors are more susceptible to larger vibrations and/or bouncing. For example, because the outer rotors are located at the distal ends of the arms which extend outward from the fuselage, the outer rotors will vibrate or bounce up and down more than the inner rotors will. The inner rotors are also mounted to the floats (e.g., which run from front to back) which further dampens any vibrations or bouncing, whereas the outer rotors are not mounted to the floats. This larger vertical displacement of the outer rotors could cause an inner rotor and outer rotor to collide which could damage the rotors. To avoid this, there is no overlap between the outer rotors and the inner rotors in this configuration. Although not shown here, in some embodiments, the two outer rotors on a given side (e.g., rotor 707 and rotor 709, or rotor 702 and rotor 704) do not overlap for this reason (e.g., to avoid a potential collision).

The position or placement of the outer rotors is selected so that the outer rotors are packed fairly efficiently and/or tightly next to the two adjacent inner rotors. For example, outer rotor 709 sits in the "V" created by inner rotor 710 and inner rotor 708. This arrangement packs the rotors in an efficient and/or tight manner which in turn reduces the footprint of the multicopter.

This diagram also illustrates the directions of rotation of the various rotors. In this example, rotors 703, 704, 706, 709, and 710 rotate in a clockwise direction when viewed from above. Rotors 701, 702, 705, 707, and 708 rotate in a counterclockwise direction when viewed from above. Or, to put it another way, rotors 701, 702, 705, 706, 709, and 710 rotate towards the fuselage and rotors 703, 704, 707, and 708 rotate away from the fuselage.

It is noted that all of the rotors in a particular column (e.g., going from the front of the multicopter to the rear of the multicopter) have alternating directions of rotation. For example, in the leftmost column shown, rotor 709 and rotor 707 have alternating directions of rotation. Similarly, in the second column from the left, rotor 710 rotates in a clockwise direction, rotor 708 rotates in a counterclockwise direction, and rotor 706 rotates in a clockwise direction. This alternation of may enable the multicopter to fly more efficiently. A rotor creates lift when the blade is traveling against the direction of wind and does not create lift when it spins in the direction of wind. By stacking up alternating rotors one behind the next in the direction of flight (e.g., typically forwards), the multicopter may experience a consistent amount of lift and/or decrease intervals of decreased lift.

**Table 1 : Directions of rotation for the exemplary rotors shown in Figure 7.**

| **Rotor** | **Direction of Rotation (viewed from above)** |
|---|---|
| Right Inner Front Rotor (701) | Counterclockwise |
| Right Outer Front Rotor (702) | Counterclockwise |
| Right Inner Middle Rotor (703) | Clockwise |
| Right Outer Back Rotor (704) | Clockwise |
| Right Inner Back Rotor (705) | Counterclockwise |
| Left Inner Back Rotor (706) | Clockwise |
| Left Outer Back Rotor (707) | Counterclockwise |
| Left Inner Middle Rotor (708) | Counterclockwise |
| Left Outer Front Rotor (709) | Clockwise |
| Left Inner Front Rotor (710) | Clockwise |

The directions of rotations shown here are selected based on a variety of factors. In some embodiments, rotors that are opposite to each other on the aircraft (e.g., where fuselage 700 acts as an axis of symmetry) may rotate in opposing directions to balance torque. For example, rotor 701 and rotor 710 are opposite to each other and rotate in opposite directions to counter the other's torque.

To illustrate the area occupied by the rotors when the rotors are on, the rotors are shown here as a circle and the number of blades is not shown. In some embodiments, a rotor has two blades and the rotors have a diameter of ∼ 1.27 metres (50 inches). A diameter of this size may correspond to the largest diameter possible for a 10 rotor configuration within the constraints of the desired multicopter dimensions (e.g., fit into a standard sized trailer).

It may be helpful to describe how the exemplary multicopter can be flown, beginning with how the pilot gets into the multicopter. In some cases, the multicopter will be floating on water and the pilot will get into the seat in the fuselage by walking on the arms, floats, and/or fuselage of the multicopter as needed. The rotors will be off at this time, and the pilot will be in no danger from the rotors when getting into the multicopter.

Once in the multicopter, the pilot may decide to steer (e.g., while floating on the water) the multicopter away from the boarding point to some takeoff location away from bystanders and/or other multicopters. In some embodiments, to do this, only the inner middle rotors are turned on and used to maneuver the multicopter to the desired takeoff location. For example, since rotor 703 and rotor 708 are shielded by other rotors, it will be harder for those rotors to hit any bystanders even if they are on. In some embodiments, only rotors 703 and 708 (i.e., the unexposed rotors) are used to maneuver the multicopter around to protect bystanders.

Alternatively, the outer rotors (702, 704, 707, and 709) may be turned off and only the inner rotors (701, 703, 705, 706, 708, and 710) are used in some embodiments to maneuver the aircraft when on the water. Although this may pose more of a risk, it may be easier and/or more efficient to maneuver the aircraft using more rotors. In some embodiments, a multicopter has wheels and the multicopter is able to maneuver on the ground in this manner (e.g., using only shielded rotors or the inner rotors for safety).

Once the multicopter reaches the desired takeoff location, the multicopter performs a substantially vertical takeoff. Once a desired altitude is reached, the pilot may rotate (e.g., while hovering at the same altitude) the multicopter about a vertical or yaw axis (not shown here) so that the multicopter is facing or pointing in some desired direction (e.g., toward a desired destination). The multicopter then flies forward, maintaining a constant altitude until the multicopter approaches a desired landing site (e.g., over water or on land). The pilot may slow the forward movement of the multicopter, coming to a forward stop generally above the desired landing site while still hovering and maintaining a constant altitude. The multicopter then descends vertically. If needed, the pilot may stop the vertical descent and (if desired) move the multicopter laterally left or right (e.g., while maintaining a constant altitude) in order to avoid objects on the ground and/or to better align the multicopter over the desired landing site. Similarly, during the vertical landing, the pilot may stop the vertical descent and (if desired) rotate the multicopter about vertical or yaw axis so that the multicopter is facing in some desired direction and/or to make it easier to shift left or right in order to land on the desired landing site.

Each of the rotors is attached in a fixed manner to the exemplary multicopter with some fixed roll angle and fixed pitch angle. The following figure shows an example of this.

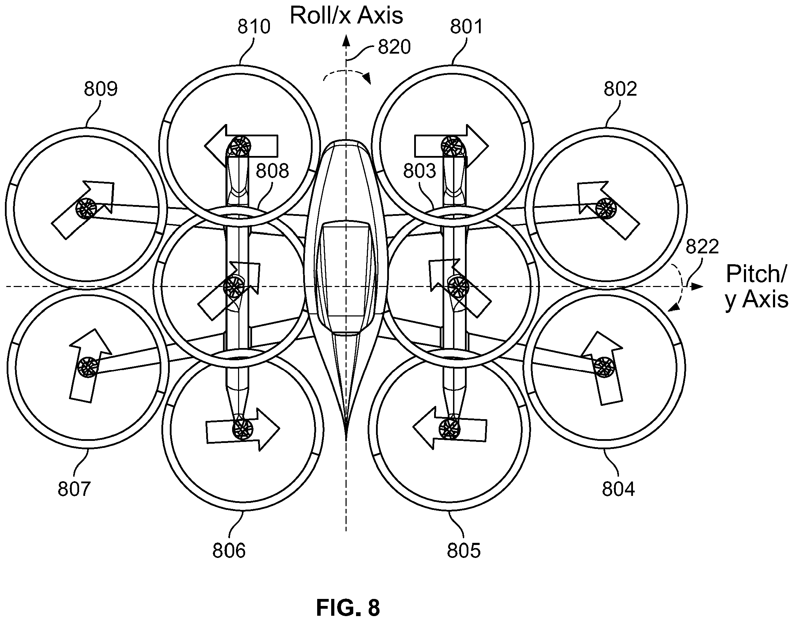

Figure 8 is a diagram illustrating an embodiment of the fixed tilt positions of the rotors in a multicopter. In this example, each rotor's tilt position is described using two angles: a roll angle and a pitch angle. The roll angle is defined by the roll axis (820), sometimes referred to as an x-axis, where a positive roll angle follows the right-hand direction of rotation (see, for example, the curved arrow about roll axis 820) and a negative roll angle is in the opposite direction. Similarly, the pitch angle for each rotor is defined by the pitch axis (822), sometimes referred to as a y-axis, where a positive pitch angle follows the right-hand direction of rotation (see, for example, the curved arrow about pitch axis 822) and a negative pitch angle is in the opposite direction.

The following table lists the roll angle and pitch angle for each rotor in this example. It is noted that opposite rotors (e.g., where the fuselage acts as an axis of symmetry) have roll angles of the same magnitude but opposite signs (e.g., rotor 810 has a roll angle of -3° and rotor 801 has a roll angle of 3°) and the same pitch angle (e.g., both rotor 810 and rotor 801 have pitch angles of 0°). Generally speaking, the roll angles and pitch angles have magnitudes within the range of 0 degrees and 10 degrees.

**Table 2: Tilt positions for the exemplary rotors shown in Figure 8.**

| **Rotor** | **Roll Angle (in degrees)** | **Pitch Angle (in degrees)** |
|---|---|---|
| Right Inner Front Rotor (801) | 3.0 | 0.0 |
| Right Outer Front Rotor (802) | -2.0 | -3.0 |
| Right Inner Middle Rotor (803) | -4.0 | -9.0 |
| Right Outer Back Rotor (804) | -2.0 | -10.0 |
| Right Inner Back Rotor (805) | -7.0 | -2.0 |
| Left Inner Back Rotor (806) | 7.0 | -2.0 |
| Left Outer Back Rotor (807) | 2.0 | -10.0 |
| Left Inner Middle Rotor (808) | 4.0 | -9.0 |
| Left Outer Front Rotor (809) | 2.0 | -3.0 |
| Left Inner Front Rotor (810) | -3.0 | 0.0 |

For convenience, an arrow is shown over each rotor which gives a general or rough sense of each rotor's tilt position For example, if each rotor is conceptually thought of as a plane, a hypothetical ball placed on that plane would roll (e.g., generally or roughly) in the direction of the arrow shown. In general, all of the rotors are tilted slightly forward, with the inner middle rotors (803 and 808) more so.

There are a number of benefits associated with the tilt positions shown in this example. First, all of the rotors have a slight (e.g., ∼5 degrees) forward bias so that when the aircraft is flying forwards, the body of the aircraft remains level. Also, the tilt positions of the rotors angles are selected to maximize the aircraft's ability to yaw while minimizing the impact of losing any single rotor. The more a rotor is tilted, the more it contributes to yawing the vehicle when it is sped up or down.

The rotors are mounted to the multicopter (e.g., more specifically, to the floats for the inner rotors and to the arms for the outer rotors) in a fixed manner at the roll angles and pitch angles shown in a fixed manner. In other words, the rotors cannot change their tilt positions from the positions shown. To maneuver, each rotor is independently controllable (e.g., different amounts of torque can be applied to each rotor), such that each rotor can rotate at a different speed or output a different amount of thrust.

The various tilt positions shown here enable the multicopter to maneuver more efficiently compared to some other multicopter designs. For example, consider another multicopter where the rotors only tilt forward or backward to some degree (i.e., all of the rotors have a roll angle of 0°). To move sideways (e.g., left or right), such a multicopter may have to expend more power because none of the rotors have a non-zero roll angle which would help to move the multicopter laterally to the left or right. In contrast, the multicopter shown here can move sideways in a more efficient manner because the rotors have non-zero roll angles. For example, to move laterally to the right, more torque would be applied to rotors 806 - 809, which would create a thrust differential and move the multicopter to the right. Since rotors 806 - 809 have positive roll angles (e.g., the tops of those rotors are tilted inward toward the fuselage), some of their overall thrust becomes lateral thrust and some becomes vertical thrust. That is, the positive roll angles of rotors 806 - 809 more efficiently generate lateral thrust and movement to the right compared to rotors with roll angles of 0.

The following figure shows front and side views of the exemplary multicopter and discusses some landing and safety features.

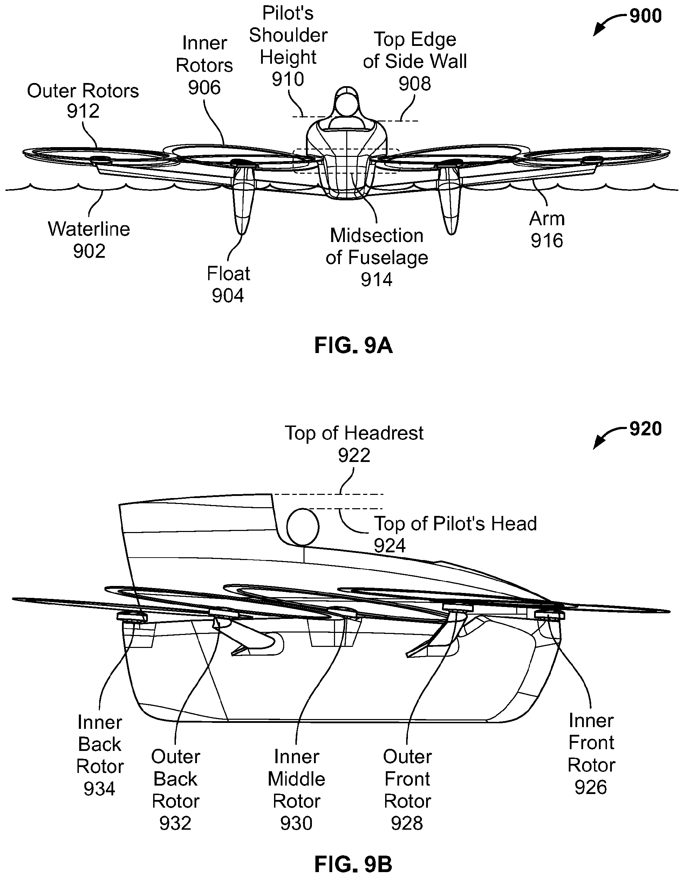

Figure 9 is a diagram illustrating a front view and a side view of a multicopter embodiment. In the example shown, diagram 900 shows a front view of the exemplary multicopter. This multicopter is capable of taking off and landing on a variety of surfaces, including water and land (not shown here). Waterline 902 shows an example of how high the water is expected to come up to on the multicopter when the multicopter is floating on the surface of the water (e.g., with the rotors off).

From the front view shown in diagram 900, floats (904) are visible. The floats serve a number of functions or purposes. One function they serve is to displace water which generates buoyancy and enables the multicopter to float (e.g., when the rotors are off and are not providing lift). The inner rotors (906) are mounted to the top of the floats (904). Structurally, this helps to stabilize the inner rotors (e.g., since the float is more substantial than the arms to which the outer rotors (912) are attached) and reduces vibrations and/or bouncing experienced by the inner rotors. As will be described in more detail below, the floats are also used to store the batteries which power the rotors.

The dimensions of the float in this example are dictated and/or set in order to satisfy various design goals and/or objectives. As diagram 900 shows, from the front view, the floats look like air foils where the floats (e.g., observed from the front) are relatively narrow. This reduces drag when the multicopter is flying forwards. Also, because the inner rotors are mounted to the floats, there is a significant amount of downdraft from the inner rotors on the floats, so the floats also act as airfoils when viewed from above. The relatively thin width of the floats minimizes the downward force on the multicopter from the inner rotors' downdraft.

The length (e.g., from front to back) of the floats is dictated by the diameter of the 3 inner rotors and the amount of overlap between the inner rotors in this example. That is, the length of the float is roughly the shortest length which can fit the 3 inner rotors with the desired amount of overlap and not substantially more than that.

Since the floats also have to displace enough water to provide sufficient buoyancy for the multicopter to float, the remaining dimension (in this case, the height of the floats) is selected to enable that. To put it another way, since drag and downdraft considerations substantially limit the width of the floats and the length of the floats is substantially dictated by the diameter and packing of the inner rotors, that only leaves the height of the rotors which can be adjusted or otherwise set to provide sufficient buoyancy. It is noted that in this example, part of the fuselage is submerged when the aircraft is floating so that the floats do not need to provide all of the necessary buoyancy for the aircraft to float; this is accounted for in the selection of the float height.

In some embodiments, the floats are filled with air (e.g., in addition to any batteries or other components which are located in the floats) to help with buoyancy. In some embodiments, the floats have bottoms made of a thick and/or robust material so that the multicopter can be land on rough terrain or surfaces other than water. In some embodiments, the bottoms of the floats are curved. This may be desirable for water landings because it increases stability during water landings.

The front view shown in diagram 900 also illustrates a number of safety features associated with the fuselage. First, with respect to the pilot, the top edge of the fuselage's side wall (908) is at substantially the same height as the pilot's shoulder (910) when the pilot is seated. The high side walls (e.g., relative to the pilot's seated position) helps to protect the pilot's arms when the rotors of the multicopter are rotating and the pilot is seated. To touch the spinning inner rotors, the pilot's arms would have to go over the side wall, and even very long limbed people will not be able to touch the inner rotors while seated due to the tall side walls. In contrast, if the side walls were lower (e.g., at waist or stomach height), it would be easier for a pilot to reach over and touch a spinning inner rotor.

Another safety feature of the fuselage relates to the position and/or shape of the fuselage, relative to the rotors. If a rotor were to break into pieces while rotating (e.g., turning the rotor pieces into projectiles), the projectiles can actually project at a non-zero angle, causing the debris to leave the plane of rotation. In this example, the side wall's height is selected to accommodate for this, for example based on testing to determine a range of angles (e.g., from the plane of rotation) any projectiles are likely to be projected at if a rotor were damaged. For example, based on testing and/or simulation, heavier and faster moving particles do not tend to go more than ±5 degrees from the plan of rotation when they break apart. This means that the exposed part of the pilot (e.g., above the top edge of the side walls) should not be near the rotors' plane(s) of rotation plus some angle of projection. For this reason, a tall side wall is again useful.

The fuselage is also elevated relative to the rotors to further separate the top edge of the side wall (908) from the plane(s) in which the rotors rotate. With the multicopter configuration shown here, a rotor projectile would hit the fuselage near the midsection of the fuselage (914), not near the top edge of the side wall (908) where the pilot is exposed. In some embodiments, the midsection of the fuselage (e.g., where a projectile from a broken rotor might hit) is reinforced or otherwise designed to protect the pilot should a blade or rotor strike the fuselage.

Returning briefly to the tilt positions shown in Table 2, at least some of the rotors are also tilted in a way that reduces the likelihood of a pilot getting struck by a broken rotor. Note that almost all of the rotors (e.g., except for rotors 801 and 810) have roll angle signs (e.g., positive or negative) which mean that the rotors are mounted such that the top of each rotor tilts inward toward the fuselage. Returning to diagram 900 in Figure 9, this means a rotor projectile rotor would go downward (e.g., away from the pilot) as opposed to upward (e.g., toward the pilot). Thus, the tilt positions of at least some of the rotors also help to protect the pilot.

Returning to diagram 920 in Figure 9, the elevated position of the fuselage (e.g., where the bottom of the fuselage is connected to the arms (916) of the multicopter) may also be desirable because of the separation between the bottom of the fuselage and the ground. This separation between the fuselage and the ground permits the multicopter to land on uneven and/or rocky ground where a rock or protrusion might otherwise damage a lower-hanging fuselage.

At the midsection (914), the fuselage narrows inward (e.g., the side wall includes a top panel which runs vertically, a middle panel which runs (e.g., inwards) horizontally, and a bottom panel which runs vertically) so that the bottom portion of the fuselage is narrower than the top portion of the fuselage. The wider top enables the pilot to more easily enter and exit the multicopter and more comfortably sit in the multicopter. For example, although not shown here, the inside of the fuselage may have arm rests. These arm rests may be located above and/or formed by the narrowing of the fuselage at the midsection (914).

The narrower bottom of the fuselage permits the inner rotors to be closer to the center of the multicopter, which reduces the span (width) of the multicopter. Note, for example, that the narrowing of the fuselage at the midsection (914) creates an overhang beneath which the tips of the inner rotors (906) spin. This permits the rotors to be squeezed in more tightly and for the span (width) of the multicopter to be smaller than if the fuselage were the same width from top to bottom. The narrowing shape also has weight advantages.

Although not shown here, in some embodiments, the seat of a multicopter includes a seatbelt for strapping in a pilot (e.g., in a recumbent and/or seated position). When the rotors are spinning, the seatbelt may help to prevent the pilot from touching the spinning rotors. Also, during a crash or rollover, a seatbelt may keep the pilot safer.

Diagram 920 shows a side view of the multicopter. As shown here, the top of the headrest (922) is higher than the top of the pilot's head (924) when the pilot is seated. The headrest is protective and reinforced so that if the multicopter flips and/or rolls, the headrest protects the pilot's head from being crushed. In some embodiments, the headrest is reinforced by being part of a roll cage or other protective frame which extends throughout the fuselage to prevent the fuselage from collapsing inward and crushing additional body parts, such as the pilot's arms, torso, and legs.

The side view shown in diagram 920 also illustrates the different rotor heights (which generally speaking are within the range of 45 cm - 55 cm off the ground) which help to achieve (e.g., in combination with the various tilt positions of the rotors) the rotor overlaps shown in Figure 7 and Figure 8.

**Table 3: Relative heights of the exemplary rotors shown in Figure 3.**

| **Rotor** | **Height** |
|---|---|
| Inner Front Rotor (926) | 48 cm |
| Outer Front Rotor (928) | 52 cm |
| Inner Middle Rotor (930) | 48 cm |
| Outer Back Rotor (932) | 53 cm |
| Inner Back Rotor (934) | 50 cm |

To address height differences in pilots, a variety of techniques may be used. In some embodiments, the seat is adjustable so that is can be raised or lowered depending upon the pilot's height. For example, a shorter pilot may not be able to see over the side wall or front wall and an adjustable seat would be raised. Conversely, an adjustable seat may be lowered for a taller pilot so that a taller pilot's head remains below the top of the headrest and/or their shoulder is substantially the same height as the top edge of the side wall. Other techniques, including booster seats for shorter pilots or swappable/removable seats, may also be employed.

The multicopter shown here is merely exemplary and is not intended to be limiting. For example, this multicopter does not have a windshield but other embodiments may include a windshield for comfort and/or protection. In some embodiments, the windshield is also used as a heads up display. In some embodiments, the cockpit is enclosed so that the pilot is protected from all sides or angles.

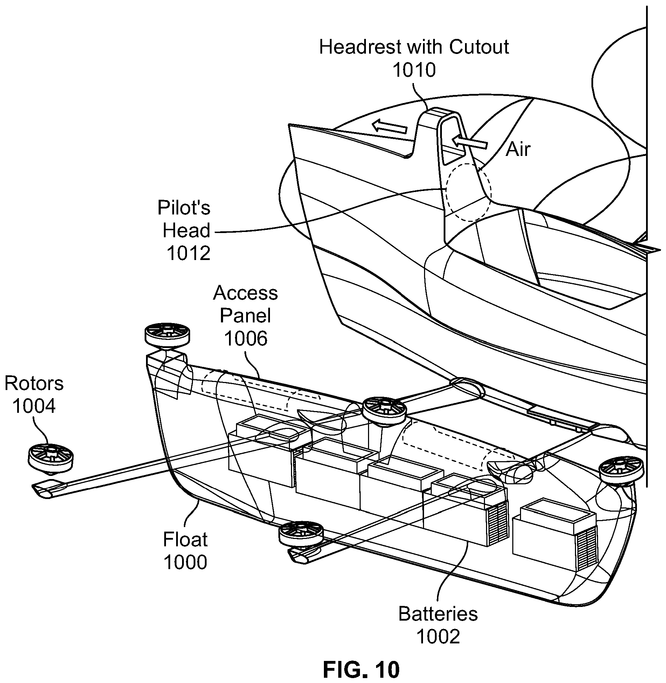

Figure 10 is a diagram illustrating an embodiment of a float which includes batteries and a headrest with a cutout. For clarity, the blades of the rotors on this side of multicopter are not shown. In this example, the float (1000) includes 5 batteries (1002), one for each rotor on this side of the multicopter. By having an independent battery for each rotor, multiple rotors will not fail if a single battery goes out.

Storing the batteries in the float may be desirable for safety reasons. In the event of a hard landing (assuming the aircraft does not flip over), the batteries will strike the ground before the pilot will, absorbing much of the kinetic energy of the impact and reducing impact force on the pilot. Similarly, in the event of a rollover, the batteries in the floats help to absorb energy to protect the pilot. For example, as the batteries decelerate, some of the structure in the floats is broken and/or sacrificed in order to protect the pilot.

In some embodiments, the float (1000) is carbon based (e.g., carbon fiber), which is relatively lightweight and permits a desired shape to be achieved. For example, if the floats were instead made of an inflatable material, it would be more difficult to achieve the desired (e.g., air foil) shape described above. Carbon related materials therefore can achieve the desired shape, while having sufficient or adequate thermal conductivity to dissipate the heat from the batteries (e.g., because the floats must have a variety of properties, including the ability to dissipate heat from the batteries so that the batteries do not overheat). In some embodiments, to help with thermal conductivity, the walls of the float are kept relatively thin (e.g., thick enough to achieve some desired structural performance, but thin enough to sufficiently dissipate heat).

Placing the batteries in the float also keeps the pilot safe in the event the batteries fail and/or overheat. Some other aircraft configurations may place the batteries under the pilot's seat, which is dangerous because a battery failure can include the battery catching on fire, emitting noxious fumes, and/or exploding. Even a battery which becomes hot but does not fail could be uncomfortable for the pilot.

To access the batteries and other components inside the float, the float has two access panels (1006) on the top surface of the float. During normal operation when access to the interior of the floats is not needed, the access panels are closed to protect the batteries and other components inside the float from water, dirt, debris, etc. When access to the interior of the float is desired, the access panel(s) may be opened. In various embodiments, the access panels may have a variety of configurations or tops, such as a completely removable lid, a hinged lid, a sliding cover, etc. In various embodiments, the access panels are held in place using an adhesive, screws, locks, etc. For simplicity and readability, only two access panels are shown here. An actual prototype of the aircraft includes four access panels per float.

The headrest (1010) in this example contains a cutout. For context, the pilot's head when seated is shown with a dotted circle (1012) and as shown the cutout is located above the expected position of the pilot's head. The cutout in the headrest reduces the drag when the multicopter is flying forward because it permits airflow through the cutout while still protecting the pilot should the multicopter flip over. In contrast, air cannot pass through a solid headrest (see, e.g., Figure 9) when the multicopter is flying forward which will result in higher drag or wind resistance.

Although the foregoing embodiments have been described in some detail for purposes of clarity of understanding, the invention is not limited to the details provided. There are many alternative ways of implementing the invention. The disclosed embodiments are illustrative and not restrictive.

## Claims

1. A multi copter comprising:
a fuselage (100; 200; 300; 402; 500; 600; 700), a plurality of rotors, and a float (312, 320; 426, 428; 502, 514, 520, 532; 904),
wherein the plurality of rotors comprises inner rotors and outer rotors,
wherein the inner rotors are coupled to a top surface of the float,
**characterised in that** the inner rotors are disposed between the fuselage and the outer rotors, and **in that** each of the inner rotors is at least partially surrounded by one or more other inner rotors, the fuselage, and one or more outer rotors.

2. The multicopter of claim 1, comprising ten rotors.

3. The multicopter of claim 1, comprising three rotors (106, 108, 110; 206, 208, 210; 302, 306, 310; 400, 406, 410; 504, 510, 516) adjacent to a side of the fuselage (100; 200; 300; 402; 500; 600; 700), two rotors (102, 104; 202, 204; 304, 308; 404, 408; 508, 512) adjacent to the three rotors, three rotors (112, 114, 118; 212, 214, 220; 314, 316, 318; 412, 418, 424; 518, 522, 530) adjacent to an opposite side of the fuselage, and two rotors (116, 120; 216, 218; 322, 326; 414, 422; 526, 528) adjacent to the three rotors adjacent to the opposite side of the fuselage.

4. The multicopter of claim 3, wherein the inner rotors comprise a middle rotor (108; 208; 306; 406; 510) of the three rotors (106, 108, 110; 206, 208, 210; 302, 306, 310; 400, 406, 410; 504, 510, 516) adjacent to the side of the fuselage (100; 200; 300; 402; 500; 600; 700) and a middle rotor (114, 214, 316, 418, 522) of the three rotors (112, 114, 118; 212, 214, 220; 314, 316, 318; 412, 418, 424; 518, 522, 530) adjacent to the opposite side of the fuselage.

5. The multicopter of claim 1, wherein the multicopter has a length of 2.54 metres (100 inches) or less.

6. The multicopter of claim 1, wherein four rotors closest to the front of the multicopter are tilted backwards, four rotors adjacent to the four rotors closest to the front of the multicopter are tilted forwards, and two rotors closest to the back of the multicopter are tilted backwards.

7. The multicopter of claim 1, wherein the fuselage (100; 200; 300; 402; 500; 600; 700) includes a side wall with a top edge (908), wherein the top edge of the side wall is higher than the plurality of rotors.

8. The multicopter recited in claim 1, wherein the plurality of rotors include:
a right inner front rotor which is configured to rotate in a first direction;
a right outer front rotor which is configured to rotate in the first direction;
a right inner middle rotor which is configured to rotate in a second direction;
a right outer back rotor which is configured to rotate in the second direction;
a right inner back rotor which is configured to rotate in the first direction;
a left inner back rotor which is configured to rotate in the second direction;
a left outer back rotor which is configured to rotate in the first direction;
a left inner middle rotor which is configured to rotate in the first direction;
a left outer front rotor which is configured to rotate in the second direction; and
a left inner front rotor which is configured to rotate in the second direction.

9. The multicopter recited in claim 1, wherein the plurality of rotors include:
a right inner front rotor which is configured to rotate in a counterclockwise direction when viewed from above;
a right outer front rotor which is configured to rotate in the counterclockwise direction when viewed from above;
a right inner middle rotor which is configured to rotate in a clockwise direction when viewed from above;
a right outer back rotor which is configured to rotate in the clockwise direction when viewed from above;
a right inner back rotor which is configured to rotate in the counterclockwise direction when viewed from above;
a left inner back rotor which is configured to rotate in the clockwise direction when viewed from above;
a left outer back rotor which is configured to rotate in the counterclockwise direction when viewed from above;
a left inner middle rotor which is configured to rotate in the counterclockwise direction when viewed from above;
a left outer front rotor which is configured to rotate in the clockwise direction when viewed from above; and
a left inner front rotor which is configured to rotate in the clockwise direction when viewed from above.

10. The multicopter recited in claim 1, wherein the plurality of rotors include:
a right inner front rotor (801) which is attached to the aircraft at a positive roll angle and a zero pitch angle; and
a left inner front rotor (810) which is attached to the aircraft at a negative roll angle and a zero pitch angle.

11. The multicopter recited in claim 1, wherein the plurality of rotors include:
a right outer front rotor (802) which is attached to the aircraft at a negative roll angle and a negative pitch angle;
a right inner middle rotor (803) which is attached to the aircraft at a negative roll angle and a negative pitch angle;
a right outer back rotor (804) which is attached to the aircraft at a negative roll angle and a negative pitch angle;
a right inner back rotor (805) which is attached to the aircraft at a negative roll angle and a negative pitch angle;
a left inner back rotor (806) which is attached to the aircraft at a positive roll angle and a negative pitch angle;
a left outer back rotor (807) which is attached to the aircraft at a positive roll angle and a negative pitch angle;
a left inner middle rotor (808) which is attached to the aircraft at a positive roll angle and a negative pitch angle; and
a left outer front rotor (809) which is attached to the aircraft at a positive roll angle and a negative pitch angle; and optionally,
the plurality of rotors are attached to the aircraft at roll angles and pitch angles with magnitudes in the range of 0 degrees and 10 degrees.

12. The multicopter recited in claim 1, wherein the fuselage (100; 200; 300; 402; 500; 600; 700) narrows at the midsection (914) of the fuselage, optionally creating an overhang beneath which at least part of an inner middle rotor rotates.

13. The multicopter recited in claim 1, wherein the plurality of rotors include:
an outer back rotor which is attached to the aircraft at a highest height associated with the plurality of rotors;
an outer front rotor which is attached to the aircraft at a second highest height associated with the plurality of rotors;
an inner back rotor which is attached to the aircraft at a third highest height associated with the plurality of rotors;
an inner front rotor which is attached to the aircraft at a lowest height associated with the plurality of rotors; and
an inner middle rotor which is attached to the aircraft at the lowest height associated with the plurality of rotors; and optionally,
the plurality of rotors are attached to the aircraft at heights in the range of 45 cm - 55 cm.

14. The multicopter recited in claim 1, wherein the fuselage (100; 200; 300; 402; 500; 600; 700) further includes a headrest with a cutout.

15. The multicopter recited in claim 1 further comprising a left float (1000) and a right float (1000), wherein:
a left inner front rotor, a left inner middle rotor, and a left inner back rotor are attached to the left float;
a right inner front rotor, a right inner middle rotor, and a right inner back rotor are attached to the right float;
the left float includes a first plurality of batteries (1002) for the left inner front rotor, the left inner middle rotor, the left inner back rotor, a left out front rotor, and a left outer back rotor; and
the right float includes a second plurality of batteries (1002) for the right inner front rotor, the right inner middle rotor, the right inner back rotor, a right out front rotor, and a right outer back rotor; and optionally,
the left float includes at least one access panel (1006) on a top surface of the left float; and
the right float includes at least one access panel (1006) on a top surface of the right float.

## Patentansprüche

1. Multikopter, der Folgendes umfasst:
einen Rumpf (100; 200; 300; 402; 500; 600; 700), eine Vielzahl von Rotoren und einen Schwimmer (312, 320; 426, 428; 502, 514, 520, 532; 904),
wobei die Vielzahl von Rotoren innere Rotoren und äußere Rotoren umfasst,
wobei die inneren Rotoren an eine obere Oberfläche des Schwimmers gekoppelt sind, **dadurch gekennzeichnet, dass**
die inneren Rotoren zwischen dem Rumpf und den äußeren Rotoren angeordnet sind, und
dadurch, dass
die inneren Rotoren jeweils mindestens teilweise von einem oder mehreren weiteren inneren Rotoren, dem Rumpf und einem oder mehreren äußeren Rotoren umgeben sind.

2. Multikopter nach Anspruch 1, umfassend zehn Rotoren.

3. Multikopter nach Anspruch 1, umfassend drei Rotoren (106, 108, 110; 206, 208, 210; 302, 306, 310; 400, 406, 410; 504, 510, 516), die einer Seite des Rumpfs (100; 200; 300; 402; 500; 600; 700) benachbart sind, zwei Rotoren (102, 104; 202, 204; 304, 308; 404, 408; 508, 512), die den drei Rotoren benachbart sind, drei Rotoren (112, 114, 118; 212, 214, 220; 314, 316, 318; 412, 418, 424; 518, 522, 530), die einer gegenüberliegenden Seite des Rumpfs benachbart sind und zwei Rotoren (116, 120; 216, 218; 322, 326; 414, 422; 526, 528), die den der gegenüberliegenden Seite des Rumpfs benachbarten drei Rotoren benachbart sind.

4. Multikopter nach Anspruch 3, wobei die inneren Rotoren Folgendes umfassen: einen mittleren Rotor (108; 208; 306; 406; 510) der der Seite des Rumpfs (100; 200; 300; 402; 500; 600; 700) benachbarten drei Rotoren (106, 108, 110; 206, 208, 210; 302, 306, 310; 400, 406, 410; 504, 510, 516) und einen mittleren Rotor (114, 214, 316, 418, 522) der der gegenüberliegenden Seite des Rumpfs benachbarten drei Rotoren (112, 114, 118; 212, 214, 220; 314, 316, 318; 412, 418, 424; 518, 522, 530).

5. Multikopter nach Anspruch 1, wobei der Multikopter eine Länge von 2,54 Metern (100 Zoll) oder weniger aufweist.

6. Multikopter nach Anspruch 1, wobei vier Rotoren, die der Front des Multikopters am nächsten liegen, nach hinten gekippt sind, vier Rotoren, die den der Front des Multikopters am nächsten liegenden vier Rotoren benachbart sind, nach vorne gekippt sind und zwei Rotoren, die dem Heck des Multikopters am nächsten liegen, nach hinten gekippt sind.

7. Multikopter nach Anspruch 1, wobei der Rumpf (100; 200; 300; 402; 500; 600; 700) eine Seitenwand mit einer Oberkante (908) umfasst, wobei die Oberkante der Seitenwand höher als die Vielzahl von Rotoren ist.

8. Multikopter nach Anspruch 1, wobei die Vielzahl von Rotoren Folgendes umfasst:
einen rechten, inneren, vorderen Rotor, der dazu konfiguriert ist, sich in einer ersten Richtung zu drehen;
einen rechten, äußeren, vorderen Rotor, der dazu konfiguriert ist, sich in der ersten Richtung zu drehen;
einen rechten, inneren, mittleren Rotor, der dazu konfiguriert ist, sich in einer zweiten Richtung zu drehen;
einen rechten, äußeren, hinteren Rotor, der dazu konfiguriert ist, sich in der zweiten Richtung zu drehen;
einen rechten, inneren, hinteren Rotor, der dazu konfiguriert ist, sich in der ersten Richtung zu drehen;
einen linken, inneren, hinteren Rotor, der dazu konfiguriert ist, sich in der zweiten Richtung zu drehen;
einen linken, äußeren, hinteren Rotor, der dazu konfiguriert ist, sich in der ersten Richtung zu drehen;
einen linken, inneren, mittleren Rotor, der dazu konfiguriert ist, sich in der ersten Richtung zu drehen;
einen linken, äußeren, vorderen Rotor, der dazu konfiguriert ist, sich in der zweiten Richtung zu drehen; und
einen linken, inneren, vorderen Rotor, der dazu konfiguriert ist, sich in der zweiten Richtung zu drehen.

9. Multikopter nach Anspruch 1, wobei die Vielzahl von Rotoren Folgendes umfasst:
einen rechten, inneren, vorderen Rotor, der dazu konfiguriert ist, sich bei Betrachtung von oben in einem Gegenuhrzeigersinn zu drehen;
einen rechten, äußeren, vorderen Rotor, der dazu konfiguriert ist, sich bei Betrachtung von oben im Gegenuhrzeigersinn zu drehen;
einen rechten, inneren, mittleren Rotor, der dazu konfiguriert ist, sich bei Betrachtung von oben in einem Uhrzeigersinn zu drehen;
einen rechten, äußeren, hinteren Rotor, der dazu konfiguriert ist, sich bei Betrachtung von oben im Uhrzeigersinn zu drehen;
einen rechten, inneren, hinteren Rotor, der dazu konfiguriert ist, sich bei Betrachtung von oben im Gegenuhrzeigersinn zu drehen;
einen linken, inneren, hinteren Rotor, der dazu konfiguriert ist, sich bei Betrachtung von oben im Uhrzeigersinn zu drehen;
einen linken, äußeren, hinteren Rotor, der dazu konfiguriert ist, sich bei Betrachtung von oben im Gegenuhrzeigersinn zu drehen;
einen linken, inneren, mittleren Rotor, der dazu konfiguriert ist, sich bei Betrachtung von oben im Gegenuhrzeigersinn zu drehen;
einen linken, äußeren, vorderen Rotor, der dazu konfiguriert ist, sich bei Betrachtung von oben im Uhrzeigersinn zu drehen; und
einen linken, inneren, vorderen Rotor, der dazu konfiguriert ist, sich bei Betrachtung von oben im Uhrzeigersinn zu drehen.

10. Multikopter nach Anspruch 1, wobei die Vielzahl von Rotoren Folgendes umfasst:
einen rechten, inneren, vorderen Rotor (801), der unter einem positiven Rollwinkel und einem Nickwinkel von null an dem Flugzeug angebracht ist; und
einen linken, inneren, vorderen Rotor (810), der unter einem negativen Rollwinkel und einem Nickwinkel von null an dem Flugzeug angebracht ist.

11. Multikopter nach Anspruch 1, wobei die Vielzahl von Rotoren Folgendes umfasst:
einen rechten, äußeren, vorderen Rotor (802), der unter einem negativen Rollwinkel und einem negativen Nickwinkel an dem Flugzeug angebracht ist;
einen rechten, inneren, mittleren Rotor (803), der unter einem negativen Rollwinkel und einem negativen Nickwinkel an dem Flugzeug angebracht ist;
einen rechten, äußeren, hinteren Rotor (804), der unter einem negativen Rollwinkel und einem negativen Nickwinkel an dem Flugzeug angebracht ist;
einen rechten, inneren, hinteren Rotor (805), der unter einem negativen Rollwinkel und einem negativen Nickwinkel an dem Flugzeug angebracht ist;
einen linken, inneren, hinteren Rotor (806), der unter einem positiven Rollwinkel und einem negativen Nickwinkel an dem Flugzeug angebracht ist;
einen linken, äußeren, hinteren Rotor (807), der unter einem positiven Rollwinkel und einem negativen Nickwinkel an dem Flugzeug angebracht ist;
einen linken, inneren, mittleren Rotor (808), der unter einem positiven Rollwinkel und einem negativen Nickwinkel an dem Flugzeug angebracht ist und;
einen linken, äußeren, vorderen Rotor (809), der unter einem positiven Rollwinkel und einem negativen Nickwinkel an dem Flugzeug angebracht ist; und wobei optional
die Vielzahl von Rotoren unter Rollwinkeln und Nickwinkeln mit Beträgen im Bereich von 0 Grad und 10 Grad an dem Flugzeug angebracht sind.

12. Multikopter nach Anspruch 1, wobei der Rumpf (100; 200; 300; 402; 500; 600; 700) am Mittelteil (914) des Rumps schmaler wird, wobei optional ein Überhang erzeugt wird, unter dem sich mindestens ein Teil eines inneren, mittleren Rotors dreht.

13. Multikopter nach Anspruch 1, wobei die Vielzahl von Rotoren Folgendes umfasst:
einen äußeren, hinteren Rotor, der auf einer mit der Vielzahl von Rotoren assoziierten höchsten Höhe an dem Flugzeug angebracht ist;
einen äußeren, vorderen Rotor, der auf einer mit der Vielzahl von Rotoren assoziierten zweithöchsten Höhe an dem Flugzeug angebracht ist;
einen inneren, hinteren Rotor, der auf einer mit der Vielzahl von Rotoren assoziierten dritthöchsten Höhe an dem Flugzeug angebracht ist;
einen inneren, vorderen Rotor, der auf einer mit der Vielzahl von Rotoren assoziierten niedrigsten Höhe an dem Flugzeug angebracht ist; und
einen inneren, mittleren Rotor, der auf der mit der Vielzahl von Rotoren assoziierten niedrigsten Höhe an dem Flugzeug angebracht ist; und wobei optional
die Vielzahl von Rotoren auf Höhen im Bereich von 45 cm-55 cm an dem Flugzeug angebracht sind.

14. Multikopter nach Anspruch 1, wobei der Rumpf (100; 200; 300; 402; 500; 600; 700) ferner eine Kopfstütze mit einer Aussparung umfasst.

15. Multikopter nach Anspruch 1, ferner umfassend einen linken Schwimmer (1000) und einen rechten Schwimmer (1000), wobei:
ein linker, innerer, vorderer Rotor, ein linker, innerer, mittlerer Rotor und ein linker, innerer, hinterer Rotor an dem linken Schwimmer angebracht sind;
ein rechter, innerer, vorderer Rotor, ein rechter, innerer, mittlerer Rotor und ein rechter, innerer, hinterer Rotor an dem rechten Schwimmer angebracht sind;
der linke Schwimmer eine erste Vielzahl von Batterien (1002) für den linken, inneren, vorderen Rotor, den linken, inneren, mittleren Rotor, den linken, inneren, hinteren Rotor, einen linken, äußeren, vorderen Rotor und einen linken, äußeren, hinteren Rotor umfasst; und
der rechte Schwimmer eine zweite Vielzahl von Batterien (1002) für den rechten, inneren, vorderen Rotor, den rechten, inneren, mittleren Rotor, den rechten, inneren, hinteren Rotor, einen rechten, äußeren, vorderen Rotor und einen rechten, äußeren, hinteren Rotor umfasst; und wobei optional
der linke Schwimmer mindestens eine Zugangsklappe (1006) auf einer oberen Oberfläche des linken Schwimmers umfasst; und
der rechte Schwimmer mindestens eine Zugangsklappe (1006) auf einer oberen Oberfläche des rechten Schwimmers umfasst.

## Revendications

1. Multicoptère comprenant :
un fuselage (100 ; 200 ; 300 ; 402 ; 500 ; 600 ; 700), une pluralité de rotors, et un flotteur (312, 320 ; 426, 428 ; 502, 514, 520, 532 ; 904),
où la pluralité de rotors comprend des rotors internes et des rotors externes,
où les rotors internes sont couplés à une surface supérieure du flotteur,
**caractérisé en ce que**
les rotors internes sont disposés entre le fuselage et les rotors externes, et
**en ce que**
chacun des rotors internes est au moins partiellement entouré d'un ou de plusieurs autres rotors internes, du fuselage et d'un ou de plusieurs rotors externes.

2. Multicoptère selon la revendication 1, comprenant dix rotors.

3. Multicoptère selon la revendication 1, comprenant trois rotors (106, 108, 110 ; 206, 208, 210 ; 302, 306, 310 ; 400, 406, 410 ; 504, 510, 516) adjacents à un côté du fuselage (100 ; 200 ; 300 ; 402 ; 500 ; 600 ; 700), deux rotors (102, 104 ; 202, 204 ; 304, 308 ; 404, 408 ; 508, 512) adjacents aux trois rotors, trois rotors (112, 114, 118 ; 212, 214, 220 ; 314, 316, 318 ; 412, 418, 424 ; 518, 522, 530) adjacents à un côté opposé du fuselage, et deux rotors (116, 120 ; 216, 218 ; 322, 326 ; 414, 422 ; 526, 528) adjacents aux trois rotors adjacents au côté opposé du fuselage.

4. Multicoptère selon la revendication 3, où les rotors internes comprennent un rotor central (108 ; 208 ; 306 ; 406 ; 510) des trois rotors (106, 108, 110 ; 206, 208, 210 ; 302, 306, 310 ; 400, 406, 410 ; 504, 510, 516) adjacents au côté du fuselage (100 ; 200 ; 300 ; 402 ; 500 ; 600 ; 700) et un rotor central (114, 214, 316, 418, 522) des trois rotors (112, 114, 118 ; 212, 214, 220 ; 314, 316, 318 ; 412, 418, 424 ; 518, 522, 530) adjacents au côté opposé du fuselage.

5. Multicoptère selon la revendication 1, où le multicoptère a une longueur de 2,54 mètres (100 pouces) ou moins.

6. Multicoptère selon la revendication 1, où quatre rotors les plus proches de l'avant du multicoptère sont basculés vers l'arrière, quatre rotors adjacents aux quatre rotors les plus proches de l'avant du multicoptère sont basculés vers l'avant, et deux rotors les plus proches de l'arrière du multicoptère sont basculés vers l'arrière.

7. Multicoptère selon la revendication 1, où le fuselage (100 ; 200 ; 300 ; 402 ; 500 ; 600 ; 700) inclut une paroi latérale avec un bord supérieur (908), où le bord supérieur de la paroi latérale est plus élevé que la pluralité de rotors.

8. Multicoptère selon la revendication 1, où la pluralité de rotors inclut :
un rotor avant interne droit qui est configuré pour tourner dans un premier sens ;
un rotor avant externe droit qui est configuré pour tourner dans le premier sens ;
un rotor central interne droit qui est configuré pour tourner dans un deuxième sens ;
un rotor arrière externe droit qui est configuré pour tourner dans le deuxième sens ;
un rotor arrière interne droit qui est configuré pour tourner dans le premier sens ;
un rotor arrière interne gauche qui est configuré pour tourner dans le deuxième sens ;
un rotor arrière externe gauche qui est configuré pour tourner dans le premier sens ;
un rotor central interne gauche qui est configuré pour tourner dans le premier sens ;
un rotor avant externe gauche qui est configuré pour tourner dans le deuxième sens ; et
un rotor avant interne gauche qui est configuré pour tourner dans le deuxième sens.

9. Multicoptère selon la revendication 1, où la pluralité de rotors inclut :
un rotor avant interne droit qui est configuré pour tourner dans un sens inverse des aiguilles d'une montre lorsqu'il est vu de dessus ;
un rotor avant externe droit qui est configuré pour tourner dans le sens inverse des aiguilles d'une montre lorsqu'il est vu de dessus ;
un rotor central interne droit qui est configuré pour tourner dans un sens des aiguilles d'une montre lorsqu'il est vu de dessus ;
un rotor arrière externe droit qui est configuré pour tourner dans le sens des aiguilles d'une montre lorsqu'il est vu de dessus ;
un rotor arrière interne droit qui est configuré pour tourner dans le sens inverse des aiguilles d'une montre lorsqu'il est vu de dessus ;
un rotor arrière interne gauche qui est configuré pour tourner dans le sens des aiguilles d'une montre lorsqu'il est vu de dessus ;
un rotor arrière externe gauche qui est configuré pour tourner dans le sens inverse des aiguilles d'une montre lorsqu'il est vu de dessus ;
un rotor central interne gauche qui est configuré pour tourner dans le sens inverse des aiguilles d'une montre lorsqu'il est vu de dessus ;
un rotor avant externe gauche qui est configuré pour tourner dans le sens des aiguilles d'une montre lorsqu'il est vu de dessus ; et
un rotor avant interne gauche qui est configuré pour tourner dans le sens des aiguilles d'une montre lorsqu'il est vu de dessus.

10. Multicoptère selon la revendication 1, où la pluralité de rotors inclut :
un rotor avant interne droit (801) qui est fixé à l'aéronef avec un angle de roulis positif et un angle de pas nul ; et
un rotor avant interne gauche (810) qui est fixé à l'aéronef avec un angle de roulis négatif et un angle de pas nul.

11. Multicoptère selon la revendication 1, où la pluralité de rotors inclut :
un rotor avant externe droit (802) qui est fixé à l'aéronef avec un angle de roulis négatif et un angle de pas négatif ;
un rotor central interne droit (803) qui est fixé à l'aéronef avec un angle de roulis négatif et un angle de pas négatif ;
un rotor arrière externe droit (804) qui est fixé à l'aéronef avec un angle de roulis négatif et un angle de pas négatif ;
un rotor arrière interne droit (805) qui est fixé à l'aéronef avec un angle de roulis négatif et un angle de pas négatif ;
un rotor arrière interne gauche (806) qui est fixé à l'aéronef avec un angle de roulis positif et un angle de pas négatif ;
un rotor arrière externe gauche (807) qui est fixé à l'aéronef avec un angle de roulis positif et un angle de pas négatif ;
un rotor central interne gauche (808) qui est fixé à l'aéronef avec un angle de roulis positif et un angle de pas négatif ; et
un rotor avant externe gauche (809) qui est fixé à l'aéronef avec un angle de roulis positif et un angle de pas négatif ; et facultativement,
les rotors de la pluralité de rotors sont fixés à l'aéronef avec des angles de roulis et des angles de pas dont l'amplitude est comprise dans la plage entre 0 degré et 10 degrés.

12. Multicoptère selon la revendication 1, où le fuselage (100 ; 200 ; 300 ; 402 ; 500 ; 600 ; 700) se rétrécit à la section centrale (914) du fuselage, créant facultativement un surplomb en dessous duquel au moins une partie d'un rotor central interne tourne.

13. Multicoptère selon la revendication 1, où la pluralité de rotors inclut :
un rotor arrière externe qui est fixé à l'aéronef à une hauteur la plus élevée associée à la pluralité de rotors ;
un rotor avant externe qui est fixé à l'aéronef à une deuxième hauteur la plus élevée associée à la pluralité de rotors ;
un rotor arrière interne qui est fixé à l'aéronef à une troisième hauteur la plus élevée associée à la pluralité de rotors ;
un rotor avant interne qui est fixé à l'aéronef à une hauteur la plus basse associée à la pluralité de rotors ; et
un rotor central interne qui est fixé à l'aéronef à la hauteur la plus basse associée à la pluralité de rotors ; et facultativement,
les rotors de la pluralité de rotors sont fixés à l'aéronef à des hauteurs comprises dans la plage de 45 cm à 55 cm.

14. Multicoptère selon la revendication 1, où le fuselage (100 ; 200 ; 300 ; 402 ; 500 ; 600 ; 700) inclut en outre un appui-tête avec une découpe.

15. Multicoptère selon la revendication 1, comprenant en outre un flotteur gauche (1000) et un flotteur droit (1000), où :
un rotor avant interne gauche, un rotor central interne gauche et un rotor arrière interne gauche sont fixés au flotteur gauche ;
un rotor avant interne droit, un rotor central interne droit et un rotor arrière interne droit sont fixés au flotteur droit ;
le flotteur gauche inclut une première pluralité de batteries (1002) pour le rotor avant interne gauche, le rotor central interne gauche, le rotor arrière interne gauche, un rotor avant externe gauche et un rotor arrière externe gauche ; et
le flotteur droit inclut une deuxième pluralité de batteries (1002) pour le rotor avant interne droit, le rotor central interne droit, le rotor arrière interne droit, un rotor avant externe droit et un rotor arrière externe droit ; et facultativement,
le flotteur gauche inclut au moins un panneau d'accès (1006) sur une surface supérieure du flotteur gauche ; et
le flotteur droit inclut au moins un panneau d'accès (1006) sur une surface supérieure du flotteur droit.
